# DEMANDE DE BREVET EUROPEEN

(11) **EP 2 278 381 A1**
(43) Date de publication de la demande: **26.01.2011**
(21) Numéro de dépôt: 10168210.2
(22) Date de dépôt: 02.07.2010
(51) Int. Cl.: G02B 27/00, F41G 3/22, G01S 5/16, G06F 3/01, G02B 27/01, G02B 5/00, G02B 5/12, G02B 27/32

(54) **Dispositif optique de détection de position de casque utilisable dans une grande gamme d'éclairement ambiant**

(30) Priorité: 10.07.2009 FR 0903422
(71) Demandeur: Thales, 92200 Neuilly Sur Seine (FR)
(72) Inventeur: Perbet, Jean-Noël, 33320 EYSINES (FR); Barbier, Bruno, 33000 BORDEAUX (FR); Potin, Laurent, 33230 COUTRAS (FR)
(74) Mandataire: Bréda, Jean-Marc

(57) **Abrégé**

Le domaine général de l'invention est celui des dispositifs optiques de position/orientation d'un casque. Le dispositif selon l'invention comprend une source de lumière fixe optionnelle (6), une caméra fixe (2) associée à un système de traitement d'images et un casque (1). Le casque possède un revêtement diffusant et comporte au moins un ensemble de mires (3), chaque mire comportant au moins un premier élément optique (31) ayant de très faibles coefficients de réflexion et de diffusion et un très fort coefficient d'absorption dans le domaine visible et dans celui de la source de lumière. Dans une variante de réalisation, chaque mire peut également comporter un premier élément optique (31) ayant un très fort coefficient de rétro-réflexion et un très faible coefficient de diffusion dans le domaine visible. La mire (3) peut également comporter un second élément optique (32) ayant un fort coefficient de diffusion ou de phosphorescence dans le domaine d'émission de la source de lumière.

## Description

Le domaine de l'invention est celui des dispositifs optiques de détection de la position et de l'orientation instantanées du casque porté par un pilote d'aéronef. D'une façon générale, on appellera posture dans la suite du texte une position et une orientation particulière du casque. Pour certaines applications aéronautiques, les casques des pilotes sont munis de dispositifs de visualisation permettant de générer dans le champ de vision du pilote des informations concernant le pilotage, la navigation ou le système d'armes. Ces visuels de casque sont généralement couplés à des systèmes de détection de position et d'orientation du casque.

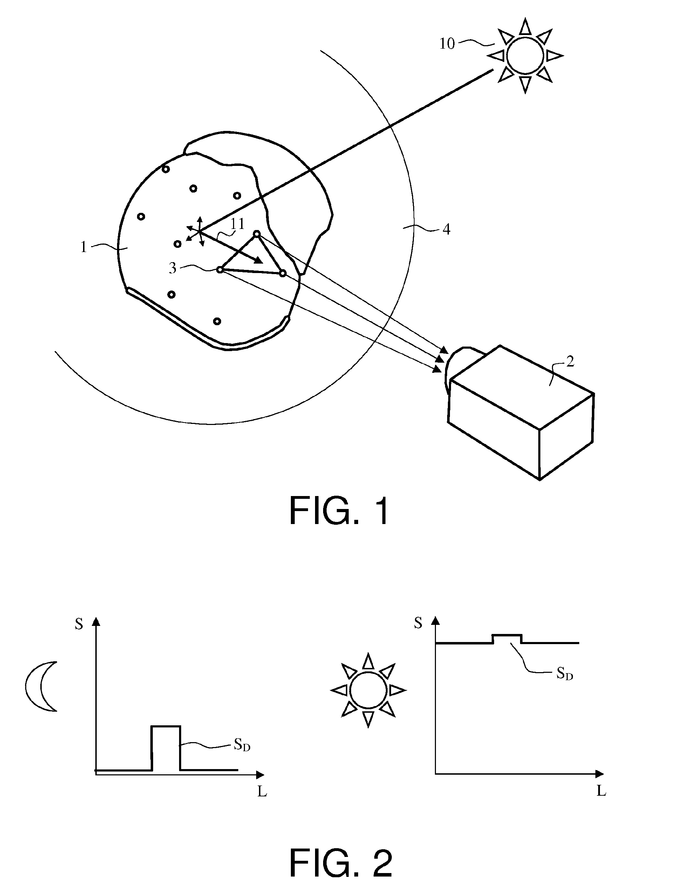

II existe différents systèmes permettant de repérer la position d'un casque. On utilise en particulier des systèmes reposant sur l'analyse de signaux optiques représentatifs de la position du casque. Ces systèmes comprennent nécessairement une ou des sources d'émission lumineuse et une ou des sources de réception lumineuse. Les sources d'émission peuvent être, comme montré sur la figure 1, des mires lumineuses ou des sources ponctuelles 3 de type diode électroluminescente fixées sur le casque 1 selon une disposition particulière, un triangle sur la figure 1. La position du casque 1 dans une zone déterminée 4 est alors obtenue par l'analyse des images des diodes reçues par des caméras 2 sous plusieurs points de vue et par calcul géométrique, on déduit la position de la tête dans l'espace. De tels dispositifs ont été réalisés par la société Karl Zeiss/Denel. On peut, à l'inverse, disposer sur le casque des barrettes de photo-capteurs ou des photodiodes et les éclairer par des projecteurs d'images particulières de façon que l'analyse, soit spatiale soit temporelle des signaux reçus par les différents photo-détecteurs permette de retrouver les informations de posture du casque.

Quelle que soit la méthode choisie, le signal détecté S_{D} est perturbé par l'éclairement solaire comme indiqué sur la figure 1. Sur cette figure, une partie 11 de l'éclairement solaire 10 est diffusée par le casque 1 vers les caméras de reconnaissance 2. On sait que l'éclairement solaire peut atteindre 70 000 lux dans le cas d'une verrière de cockpit ayant une transmission de 70 %. Le signal détecté S_{D} devient peu exploitable dès que l'éclairement solaire reçu par le casque est important comme on le voit sur la figure 2 qui représente à gauche le signal S_{D} sous faible éclairement représenté par un croissant de lune et à droite le signal S_{D} sous fort éclairement représenté par un soleil. Le signal S_{D} est donné en unités arbitraires, en fonction d'une position L sur la matrice de photo-détecteurs. Lorsque les sources d'émission sont sur le casque, leur signal est noyé dans l'éclairement solaire. Lorsque les photo-détecteurs sont sur le casque, le signal reçu en provenance de la source est noyé dans l'éclairement solaire. Le moyen classiquement utilisé pour améliorer la détection consiste à fournir une puissance de source importante. On peut également émettre et recevoir dans une plage de longueurs d'onde située en dehors du rayonnement solaire visible, c'est-à-dire située soit dans l'infrarouge, soit dans l'ultra-violet proche. Cependant, les niveaux d'éclairement solaire sont encore élevés dans les bandes infrarouge et ultraviolet et ce type de solution nécessite des sources d'émission et de réception spécifiques qui augmentent nécessairement les coûts du système de détection.

Le dispositif selon l'invention a pour but de réaliser un système de détection optique de position et d'orientation, utilisable dans une grande gamme d'éclairements, de jour avec des éclairements de l'ordre de 100 000 lux et de nuit, avec des éclairements de l'ordre de 0,01 lux. Aux forts éclairements, l'invention utilise l'éclairement solaire au lieu de le combattre en mettant en oeuvre des mires passives sur le casque ne réfléchissant pas l'éclairement solaire ou réfléchissant la lumière solaire dans un axe différent de celui des capteurs optiques. Aux faibles éclairements, des sources de lumière d'appoint assurent, si besoin est, la visibilité des mires. Ces mires peuvent être bordées d'un film phosphorescent émettant une lumière visible sous excitation de la source d'appoint dans le domaine de l'ultraviolet.

Cette solution a pour principaux avantages, par rapport à l'état de l'art antérieur, de ne pas nécessiter d'alimentation électrique pour les mires portées par le casque du pilote, d'être particulièrement simple et robuste et de donner des rapports signal/bruit constamment élevés quel que soit l'éclairement. Elle est donc parfaitement adaptée à l'environnement des cockpits d'aéronefs.

Plus précisément, l'invention a pour objet un dispositif optique de détection de position/orientation d'un casque, ledit dispositif comprenant au moins une caméra fixe associée à un système de traitement d'images et un casque, **caractérisé en ce que** le casque possède un revêtement diffusant et comporte au moins un ensemble de mires, chaque mire comportant au moins un premier élément optique ayant de très faibles coefficients de réflexion et de diffusion et un très fort coefficient d'absorption dans le domaine visible. De plus, ledit dispositif peut comprendre au moins une source de lumière fixe additionnelle, le premier élément optique ayant de très faibles coefficients de réflexion et de diffusion et un très fort coefficient d'absorption dans le domaine d'émission de ladite source de lumière.

Avantageusement, le premier élément est soit un corps noir, c'est-à-dire une enceinte comportant un trou, le trou étant de faibles dimensions devant les dimensions de l'enceinte, soit comporte une couche de phosphure de nickel, soit encore est constitué d'un tapis de nanotubes de carbone.

Avantageusement, dans un second mode de réalisation, le dispositif comprend au moins une caméra fixe associée à un système de traitement d'images et un casque, **caractérisé en ce que** le casque comporte au moins un ensemble de mires, chaque mire comportant un premier élément optique ayant un très fort coefficient de rétro-réflexion et un très faible coefficient de diffusion dans le domaine visible. Comme dans le mode précédent, le dispositif peut comprendre au moins une source de lumière fixe additionnelle.

Dans ce cas, le premier élément optique peut être un catadioptre.

Avantageusement, le dispositif comprend des moyens opto-mécaniques permettant de réaliser une image de la source de lumière sur l'axe optique de la caméra.

Avantageusement, la mire comporte un second élément optique, le second élément optique ayant un fort coefficient de diffusion ou de phosphorescence ou de fluorescence dans le domaine d'émission de la source de lumière, les mires de chaque ensemble de mires pouvant être de forme différente, le second élément optique pouvant entourer le premier élément optique.

Enfin, la source peut émettre dans l'ultra-violet, le second élément étant phosphorescent ou fluorescent dans le domaine d'émission de ladite source de lumière.

L'invention sera mieux comprise et d'autres avantages apparaîtront à la lecture de la description qui va suivre donnée à titre non limitatif et grâce aux figures annexées parmi lesquelles :
La figure 1 déjà commentée représente un système de position de détection selon l'art antérieur ;
La figure 2 déjà commentée représente le signal en présence et en l'absence de lumière parasite dans un dispositif selon l'art antérieur ;
La figure 3 représente un premier mode de réalisation d'un dispositif selon l'invention sous éclairement solaire;
La figure 4 représente le signal dans la configuration de la figure 3;
La figure 5 représente un premier mode de réalisation d'un dispositif selon l'invention sous faible éclairement ;
La figure 6 représente le signal dans la configuration de la figure 5;
La figure 7 représente une première mire selon l'invention ;
La figure 8 représente un second mode de réalisation d'un dispositif selon l'invention sous fort éclairement ;
La figure 9 représente le signal dans la configuration de la figure 8 sous faible éclairement ;
La figure 10 représente trois exemples de mires catadioptriques.

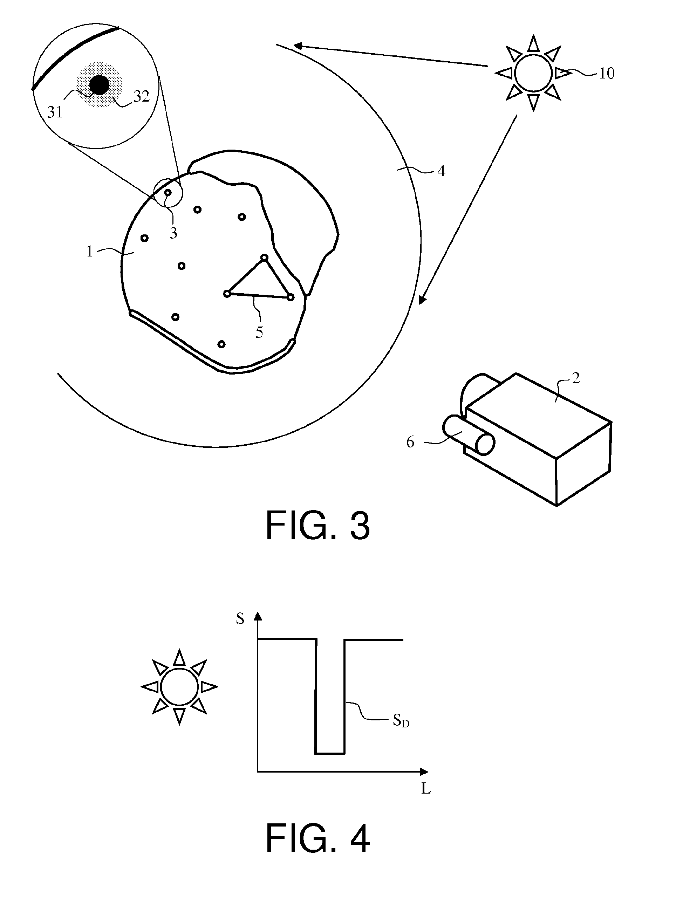

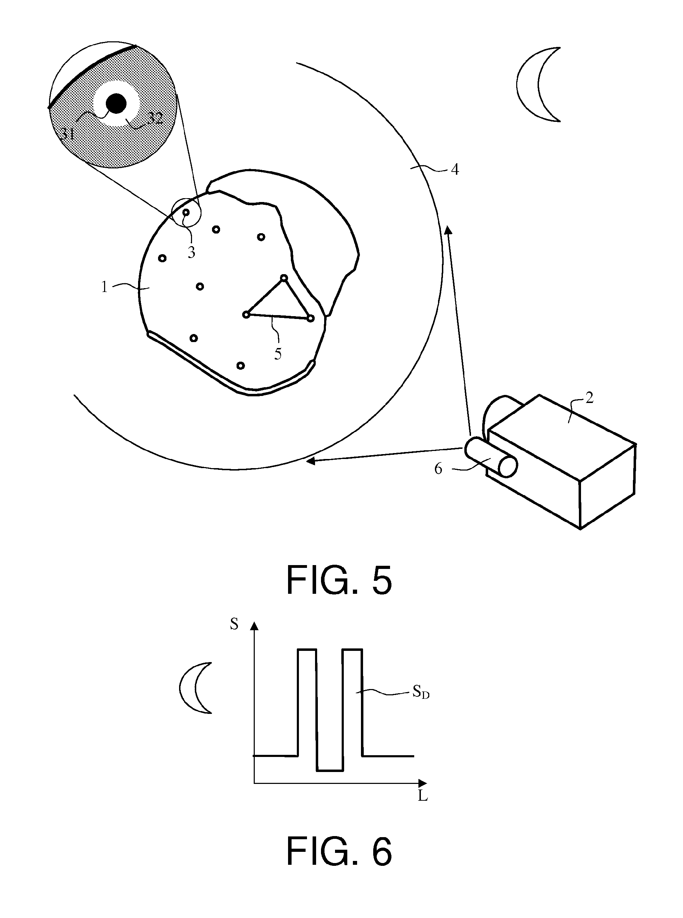

A titre de premier exemple de réalisation, un dispositif de détection de posture de casque est décrit sur les figures 3 à 7. La figure 3 représente le dispositif sous éclairement solaire et la figure 5 représente le même dispositif sous faible éclairement. Les figures 4 et 6 représentent le signal reçu sous fort et sous faible éclairement.

Comme indiqué sur les figures 3 et 5, le dispositif comprend un casque 1 porté par un utilisateur mobile dans une zone déterminée 4. Le dispositif selon l'invention est bien adapté pour fonctionner dans un environnement aéronautique comme un cockpit d'aéronef. Dans ce cas, l'utilisateur est un pilote. Cependant, on peut utiliser ce dispositif pour toutes applications nécessitant une connaissance de la posture de la tête de l'utilisateur.

Le casque 1 possède un revêtement diffusant mat, avantageusement de couleur claire et comporte un ensemble de mires 3. Chaque mire 3 est représentée par un cercle sur les figures 3 et 5.

Pour le fonctionnement de nuit ou à très bas niveau de lumière, le dispositif de détection peut comporter également une ou plusieurs sources de lumière 6 fixes d'appoint réparties dans le cockpit. Il est également possible, pour éviter l'emploi de sources supplémentaires d'utiliser des caméras susceptibles de fonctionner à très bas niveau de lumière comme des caméras à intensificateurs de lumière. Ces sources sont en nombre suffisant pour éclairer la totalité de la zone 4 de débattement du casque. Sur les figures 3 et 5, la source 6 est proche de la caméra 4, mais ce n'est pas une nécessité. Ces sources 6 peuvent fonctionner dans la plage de sensibilité de la caméra. Elles peuvent également être des sources de rayonnement ultraviolet (UV). Dans ce cas, comme on le verra, les mires doivent comporter des parties optiques fluorescentes détectables par les caméras. Ces sources sont préférentiellement des diodes électroluminescentes qui présentent le triple avantage d'une grande compacité, d'une grande robustesse et d'une bonne fiabilité.

La détection des mires est assurée par un ensemble de caméras 2. Pour des raisons de clarté, une seule caméra est représentée sur les figures 3 et 5. Les caméras sont disposées de telle sorte que, quelque soit les mouvements de la tête de l'utilisateur, un certain nombre de mires soient constamment dans le champ des caméras. On estime généralement que trois caméras suffisent. Les caméras peuvent être à capteurs CCD (Charge Coupled Device). La focale et l'ouverture de l'objectif des caméras doivent être choisies suffisamment faibles de façon que les images des mires soient constamment nettes sur la surface photosensible. La résolution de la caméra doit être adaptée à la précision de détection souhaitée. La sensibilité de la caméra doit être suffisante pour que les images données par les sources soient exploitables.

Ces mires sont, si nécessaire, de formes géométriques différentes de manière à pouvoir facilement les distinguer. Elles peuvent être en forme de cercle ou de trait. Leur répartition sur le casque forme des figures géométriques, des « constellations » pouvant être facilement identifiées par le système de traitement d'image. Ainsi, sur les figures 3 et 5, trois mires forment un triangle 5. Le système de traitement d'images n'est pas représenté sur les figures 3 et 5. Après calcul, il permet de retrouver la posture du casque dans l'espace.

Chaque mire 3 comporte un premier élément optique 31 comme représenté sur les parties zoomées des figures 3 et 5. Cet élément a de très faibles coefficients de réflexion et de diffusion dans le domaine visible et dans celui de la source de lumière 6. Il a également une très forte absorption à ces longueurs d'onde. Ainsi, sous fort éclairement, le contraste entre ce premier élément optique 31 et la couleur du casque est très important et peut facilement être détecté par les caméras. Sur la figure 3, l'élément optique 31 apparaît en noir sur fond blanc. La figure 4 représente le signal S_{D} de ce même élément sous fort éclairement. Comme on le voit, le contraste est excellent et est totalement indépendant du niveau d'éclairement.

Chaque mire 3 peut comporter également un second élément optique 32 comme représenté sur les parties zoomées des figures 3 et 5, le second élément optique 32 ayant un fort coefficient de diffusion, de fluorescence ou de phosphorescence dans le domaine d'émission de la source de lumière. Ainsi, de nuit ou sous faible éclairement, le contraste de la mire est obtenu pas la bordure phosphorescente excitée par les diodes électroluminescentes UV proches des caméras CCD et insensibles au rayonnement UV. Sur la figure 5, l'élément optique 32 apparaît en blanc sur le fond gris du casque. La figure 6 représente le signal S_{D} de ce même élément sous faible éclairement. Là encore, le contraste est excellent. Cette méthode présente l'avantage d'utiliser une source de lumière dont le rayonnement est absorbé par la verrière du cockpit, la rendant indétectable de l'extérieur.

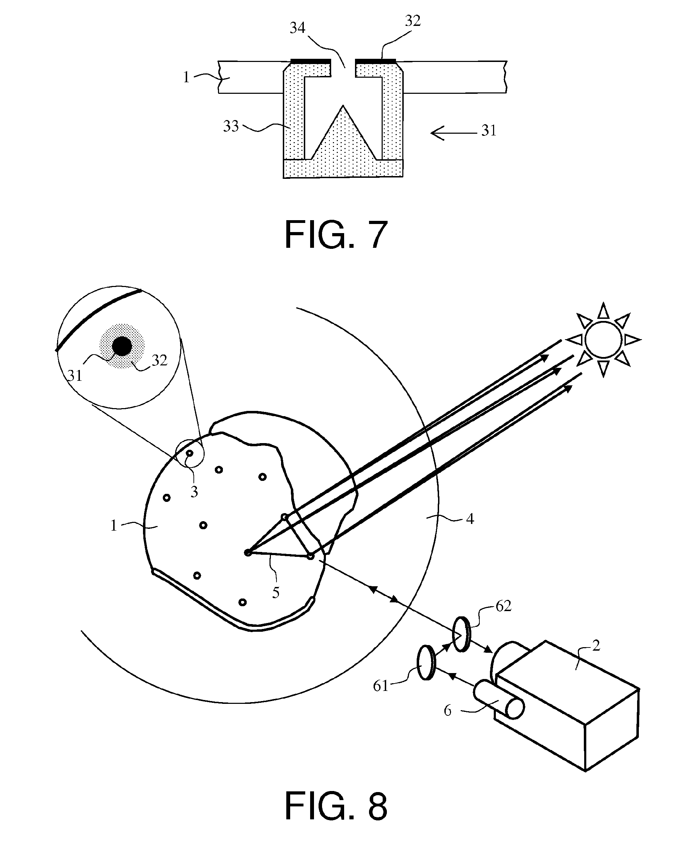

Le premier élément 31 est soit un corps noir, c'est-à-dire une enceinte 33 comportant un trou 34 comme indiqué sur la vue en coupe de la figure 7, le trou étant de faibles dimensions devant les dimensions de l'enceinte, soit comporter une couche de phosphure de nickel, soit encore être constitué d'un tapis de nanotubes de carbone. Dans le premier cas, le coefficient de réflexion R du corps noir est de l'ordre de 10⁻⁴, dans le second cas, le coefficient de réflexion R du phosphure de nickel est de l'ordre de 20.10⁻⁴. Enfin, le coefficient de réflexion R d'un tapis de nanotubes de carbone est de l'ordre de 4.10⁻⁴.

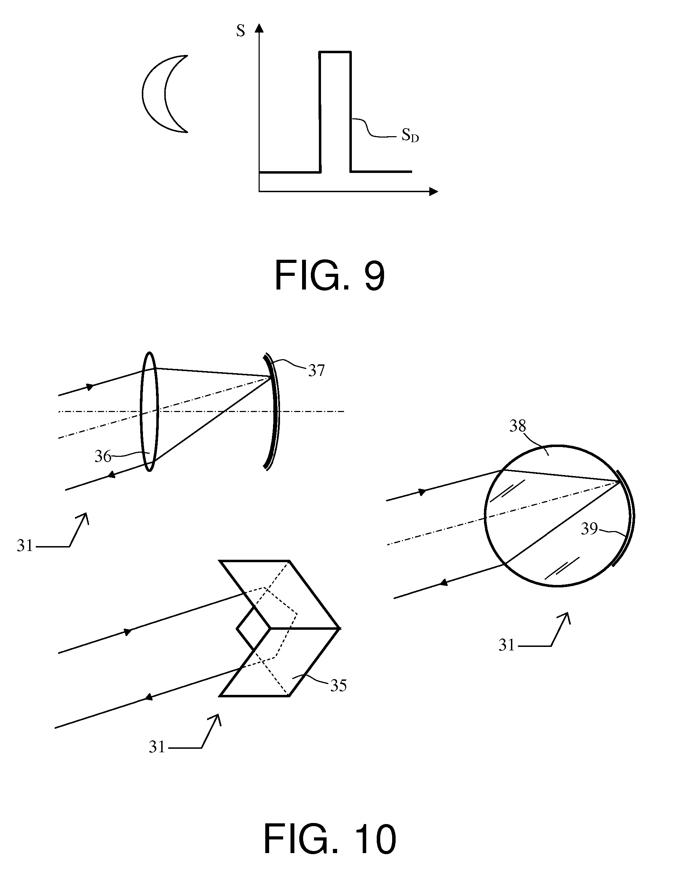

A titre de second exemple de réalisation qui est une variante du dispositif précédent, un second dispositif de détection de posture de casque est décrit sur les figures 8 à 10. La figure 8 représente le dispositif sous fort éclairement. La figure 9 représente le signal reçu sous faible éclairement et la figure 10 représentent diverses modes de réalisation de la mire 3.

Ce second dispositif diffère essentiellement du premier mode par le fonctionnement des mires. Dans le cas présent, chaque mire 3 comporte un premier élément optique 31 de type «catadioptre » ayant un très fort coefficient de rétro-réflexion et un très faible coefficient de diffusion dans le domaine visible. Ainsi, le rayonnement solaire est nécessairement renvoyé dans la direction du soleil comme on peut le voir sur la figure 8 et ne peut atteindre les caméras. De jour, le fonctionnement est donc identique à celui du dispositif précédent.

On appelle « catadioptre » tout réflecteur ou rétro-réflecteur optique ayant la propriété de réfléchir un pinceau de lumière dans la même direction que sa direction incidente. A titre d'exemple, un « coin de cube » constitué de trois miroirs plans orthogonaux entre eux est un catadioptre. Ainsi, un pinceau de lumière émis par la partie émettrice et éclairant le catadioptre est réémis dans la même direction vers la partie réceptrice avec un rendement excellent. De la même façon, tout faisceau lumineux qui n'est pas issu de la source et qui frappe le catadioptre, ne produit, par principe, quasiment aucun éclairement vers la partie réceptrice.

Un catadioptre peut être constitué, comme indiqué sur la figure 10 :
- d'un coin de cube, c'est-à-dire d'un assemblage de trois miroirs plans 35 perpendiculaires entre eux ;
- d'une lentille simple 36 et d'un miroir réfléchissant 37 disposé sur la surface focale de cette lentille ;
- d'une sphère transparente 38 d'indice optique 2 encore appelé « oeil de chat » et dont la face arrière 39 est réfléchissante.

On peut également utiliser des miroirs à conjugaison de phase. Tous ces dispositifs présentent la particularité de réfléchir tout rayon lumineux dans la même direction que sa direction d'incidence.

De nuit ou à très bas niveau de lumière, si la sensibilité des caméras n'est plus suffisante, on peut utiliser des sources de lumière d'appoint. Dans ce cas, il existe deux modes de fonctionnement possibles dépendant de la position de la source de lumière par rapport à la caméra. Dans un premier mode de réalisation, la source de lumière n'est pas sur l'axe optique de la caméra. Dans ce cas, le rayonnement de la source éclairant le catadioptre est renvoyé vers la source et la caméra ne reçoit aucun éclairage venant du catadioptre. Le catadioptre apparaît noir sur fond clair. Il est alors avantageux que la mire comporte un second élément optique 32 ayant un fort coefficient de diffusion ou de phosphorescence dans le domaine d'émission de la source de lumière ou que le revêtement du casque soit de couleur claire en périphérie du catadioptre.

Dans le second mode de réalisation représenté sur la figure 8, le dispositif comprend des moyens opto-mécaniques permettant de réaliser une image de la source de lumière sur l'axe optique de la caméra. Dans le cas de la figure 8, ces moyens sont simplement un miroir 61 et une lame semi-réfléchissante 62 assurant le mélange des deux voies source-caméra. Dans ce cas, le rayonnement de la source illuminant le catadioptre revient vers la caméra. Le catadioptre apparaît brillant sur fond sombre comme on le voit sur la figure 9. Il n'est plus nécessaire que la mire 3 comporte un second élément optique 32. Le revêtement du casque est avantageusement de couleur sombre en périphérie du catadioptre.

Il est possible, aux dispositions générales décrites ci-dessus, d'apporter un certain nombre de modifications permettant d'améliorer la détection. Ainsi, la source de lumière, lorsqu'elle est présente, peut être éteinte lorsque les conditions d'ensoleillement sont suffisantes, elle peut être modulée temporellement, elle peut être à balayage, être asservie pour éclairer des zones particulières du casque.

## Revendications

1. Dispositif optique de détection de position/orientation d'un casque, ledit dispositif comprenant au moins une caméra fixe (2) associée à un système de traitement d'images et un casque (1) , **caractérisé en ce que** le casque (1) possède un revêtement diffusant et comporte au moins un ensemble de mires (3), chaque mire comportant au moins un premier élément optique (31) ayant de très faibles coefficients de réflexion et de diffusion et un très fort coefficient d'absorption dans le domaine visible, le coefficient de réflexion étant inférieur ou égal à 20.10⁻⁴.

2. Dispositif optique de détection de position/orientation d'un casque selon la revendication 1, **caractérisé en ce que** ledit dispositif comprend au moins une source de lumière fixe (6), le premier élément optique (31) ayant de très faibles coefficients de réflexion et de diffusion et un très fort coefficient d'absorption dans le domaine d'émission de ladite source (6).

3. Dispositif optique de détection de position/orientation d'un casque selon la revendication 1, **caractérisé en ce que** le premier élément (31) est un corps noir, c'est-à-dire une enceinte (33) comportant un trou (34), le trou étant de faibles dimensions devant les dimensions de l'enceinte.

4. Dispositif optique de détection de position/orientation d'un casque selon la revendication 1, **caractérisé en ce que** le premier élément (31) comporte une couche de phosphure de nickel.

5. Dispositif optique de détection de position/orientation d'un casque selon la revendication 1, **caractérisé en ce que** le premier élément (31) est constitué d'un tapis de nanotubes de carbone.
